# EUROPEAN PATENT APPLICATION

(11) **EP 4 339 888 A1**
(43) Date of publication of application: **20.03.2024**
(21) Application number: 22196036.2
(22) Date of filing: 16.09.2022
(51) Int. Cl.: G06T 7/11

(54) **INTERACTIVE MEDICAL IMAGE ANALYSIS WITH RECURSIVE VISION TRANSFORMER NETWORKS**

(71) Applicant: Siemens Healthcare GmbH, 91052 Erlangen (DE)
(72) Inventor: GEORGESCU, Bogdan, Princeton, 08540 (US); MANSOOR, Awais, Potomac, 20854 (US); GRBIC, Sasa, Plainsboro, 08536 (US); COMANICIU, Dorin, Princeton, 08540 (US)
(74) Representative: Schwarz, Claudia

(57) **Abstract**

The invention relates to a method for training a neural network, NN, comprising a recursive vision transformer, RVT, architecture, for interactive medical image segmentation. A training phase comprises receiving a medical image dataset from a database of medical image datasets as input to the NN, with the medical image dataset comprising a medical image (302) and an annotated segmentation; performing, by hidden layers of the NN, a first segmentation (304) of anatomic structures comprised in the medical image (302); outputting the first segmentation (304); receiving, at a user interface, a correction (306) on the first segmentation (304); determining, based on the first segmentation (304) and the correction (306), a second segmentation (312); determining a distance metric between the second segmentation (312) and the annotated or first segmentation (304); combining the distance metric, second segmentation (312) and medical image (302) into a further medical image dataset (314); and iteratively repeating the steps.

## Description

Deep-Learning (DL) based methods provide the current state-of-the-art solutions for automatic medical image analysis for classification or segmentation tasks. However, there are cases in which, due to anatomical variants, various pathologies, or image acquisition challenges (e.g., signal dropout, noise), the conventional automatic segmentation techniques of organs or lesions cannot be directly used in clinical practice. In addition, it is not typically clear which parts of the result of the DL-based method are more reliable and which ones are more affected by ambiguity.

Conventional DL-based methods are forward-only applications of neural networks (NNs) trained to infer the target output given the input image. The conventionally most used NN architectures are based on convolutional layers, and more recently vision transformer architectures have been introduced for this task; a survey of these methods is introduced in [1,2]. When presented with input images that are diverging from the training dataset, due to pathologies, anatomical variants or signal noise, such methods have challenges to produce an accurate result thus requiring user corrections. Interactive DL-based methods for image segmentation are less studied in current literature [3] mostly due to demanding requirements in terms of availability of annotated data with corrections, memory and computational complexity.

It is therefore an object of the present invention to provide a technique for fast convergence of medical image segmentations, in particular with user interactions. Alternatively or in addition, an object of the present invention is to achieve higher segmentation accuracy and robustness with fewer user interactions and less user time. Further alternatively or in addition, an object of the present invention is to achieve segmentations of medical images at high speeds with high accuracy and/or limited memory space. Still further alternatively or in addition, it is an object of the present invention to provide a technique for segmenting anatomical structures, in particular pathologies, for which training datasets are scarce.

This object is solved by a computer-implemented method for training a neural network (NN) for interactive medical image segmentation, by a NN system, by a computer program product, and by a computer-readable storage medium according to the appended independent claims. Advantageous aspects, features and embodiments are described in the dependent claims and in the following description together with advantages.

In the following the solution according to the invention is described with respect to the claimed computer-implemented method as well as with respect to the claimed NN system. Features, advantages or alternative embodiments herein can be assigned to the other claimed objects (e.g., the computer program or a computer program product) and vice versa. In other words, claims for the NN system can be improved with features described or claimed in the context of the method. In this case, the functional features of the method are embodied by structural units of the system and vice versa, respectively.

As to a method aspect, a computer-implemented method for training a neural network (NN) for interactive medical image segmentation is provided. A training phase of the NN comprises a step of receiving, at an input layer of the NN, a first medical image dataset from a training database of medical image datasets as input to the NN. The first medical image dataset comprises a medical image and an annotated segmentation (which may alternatively be denoted as ground truth segmentation). The NN comprises a recursive vision transformer (RVT) architecture.

The training phase of the NN further comprises a step of performing, by one or more hidden layers of the NN with interconnections, a first segmentation of anatomic structures comprised in the medical image of the received first medical image dataset. The training phase of the NN further comprises a step of outputting, at an output layer of the NN, the performed first segmentation for providing the option for receiving corrections by a user. The training phase of the NN further comprises a step of receiving, at a user interface (UI) at least one correction by the user on the output first segmentation. The training phase of the NN further comprises a step of determining, based on the output first segmentation, a second segmentation taking into account the at least one received correction to the first segmentation.

The training phase of the NN further comprises a step of determining a distance metric between the determined second segmentation and the annotated segmentation (alternatively denoted as ground truth segmentation) comprised in the received medical image dataset in association with the medical image. Alternatively or in addition, the step of determining the distance metric comprises determining a distance metric between the determined second segmentation and the output first segmentation.

The training phase of the NN further comprises a step of combining the determined distance metric, the determined second segmentation and the medical image into a second medical image dataset. The training phase of the NN further comprises a step of receiving, at the input layer of the NN, the combined second medical image dataset as input to the NN. The training phase of the NN further comprises a step of performing, by the one or more hidden layers of the NN with interconnections, a third segmentation of the anatomic structures comprised in the medical image of the received second medical image dataset. Performing the third segmentation comprises changing one or more weights of the interconnections of the NN. The changing of the one or more weights of the interconnections of the NN is based on the determined distance metric comprised in the second medical image dataset.

The training phase of the NN further comprises a step of outputting, at the output layer of the NN, the performed third segmentation.

The training phase of the NN further comprises a step of determining a further distance metric between the output third segmentation, and/or a fourth segmentation based on the third segmentation (e.g., if at least one further correction by the user is received at the UI), and the annotated segmentation (also denoted as ground truth segmentation) comprised in the received second medical image dataset. Alternatively or in addition, the step of determining the further distance metric comprises determining a further distance metric between the output third segmentation and the determined second segmentation, and/or a further distance metric between the (e.g., determined, in particular responsive to one or more further corrections by the user) fourth segmentation and the output third segmentation.

The training phase of the NN still further may comprise a step of selectively repeating at least the steps of receiving a combined further medical image data set, performing a further segmentation of the anatomic structures comprised in the medical image of the received further medical image data set, outputting the performed further segmentation, and determining a (e.g., still) further distance metric between the output further segmentation and the annotated segmentation. Alternatively or in addition, the (e.g., still) further distance metric is determined between the output further segmentation and the directly preceding segmentation.

The selectivity of the step of selectively repeating may alternatively or in addition comprise determining to repeat the steps if the further distance metric, or any still further distance metric, exceeds a predetermined threshold. Alternatively or in addition, the selectivity of the step of selectively repeating comprises determining to not repeat the steps if the further distance metric, or any still further distance metric, falls below the predetermined threshold.

The computer-implemented method may comprise deep learning (DL) .

A transformer may comprise a DL model that a uses a self-attention mechanism, and/or differentially weighting a significance of each part of the input data, e.g., any medical image dataset comprising the medical image.

A self-attention mechanism may comprise processing any token (e.g., any patch, pixel, anatomical structure, and/or segmentation protocol) of the input data, e.g., any medical image dataset comprising the medical image, at the same time and calculating attention weights between them in successive layers. Alternatively or in addition, the self-attention may only use information about other tokens from lower layers, enabling the computation of all tokens in parallel and/or improving a speed of the DL model.

A transformer architecture may comprise an encoder and a decoder.

A vision transformer (ViT) may comprise a transformer targeted at image recognition and/or image segmentation.

The RVT architecture may comprise a hierarchical encoder and a hierarchical decoder.

The hierarchical encoder may comprise a plurality of overlap patch embedding blocks (briefly also denoted as overlap patch embeddings), and/or a plurality of transformer blocks. By the patch embeddings, the hierarchical encoder may be enabled for multi-label features with a variety of different resolutions of the medical image.

The hierarchical decoder may comprise a plurality of upsampling blocks.

The RVT architecture may be configured for iterative adaption of the segmentation, e.g., by iteratively re-performing a segmentation until the output segmentation converges.

An RVT may be more robust than conventional, and/or other, NNs. Alternatively or in addition, by using an RVT architecture, the result of the medical image segmentation may be more robust and/or accurate than conventionally, in particular when segmenting a medical image with an anatomical structure and/or segmentation protocol, on which the NN system had not (or only with a very small number of training datasets) been trained in the training phase. Alternatively or in addition, by using an RVT architecture, the convergence to an accurate and/or robust segmentation may faster than conventionally.

The training database of medical images may comprise annotated medical images. The annotated medical images may also be denoted as labelled images. The annotations and/or labels may comprise segmentations performed by one or more expert(s), in particular a medical practitioner and/or radiologist.

The annotated segmentation may correspond to, or may comprise, a segmentation performed by a medical practitioner, e.g., a radiologist. Alternatively or in addition, the annotated segmentation may correspond to, or may comprise, an annotation and/or label of the first medical image dataset.

The annotated segmentation may also be denoted as ground truth segmentation (briefly: ground truth).

The annotated segmentation may comprise two or more components of, e.g., an anatomical structure and/or a pathological structure (also denoted as pathology or as health-related structure), e.g., the left lung and the right lung, and/or different types of organs, e.g., liver and one or two kidneys.

The step of receiving the first medical image dataset, and/or any further medical image dataset, at the input layer of the NN may comprise extracting the medical image for performing the first segmentation, and/or for performing any further segmentation. Alternatively or in addition, the step of receiving the second medical image dataset (and/or any further medical image dataset) at the input layer of the NN may comprise extracting the distance metric (and/or any further distance metric) and/or the second segmentation (and/or any segmentation comprised in the further medical image dataset) for modifying the respective segmentation, at least within one or more regions of interest (ROI) indicated by distance metric.

The second segmentation may directly and/or indirectly comprise the one or more corrections input by the user. E.g., a change in a contour starting and ending on a contour of the first segmentation may directly provide the second segmentation. Alternatively or in addition, e.g., if a correction by the user is only a line (in particular without endpoints at a contour of the first segmentation), the second segmentation may require a computational effort. E.g., the second segmentation may comprise an output of the NN, or a further NN, based on the first segmentation and the correction by the user as input. Further alternatively or in addition, a direct change of the segmentation, e.g., a change of a contour at one anatomical position, may be combined with an indirect change of the segmentation, e.g., a change of a contour at another anatomical position determined by a NN based on one or more user corrections.

Any one of the annotated, first, second, third, fourth, or any further segmentation may comprise a classification, e.g., as healthy structure and/or pathological structure. The classification may be performed pixel-wise, e.g., independently for each pixel of the medical image. Alternatively or in addition, the segmentation may be a binary segmenatation, and/or a K-ary segmentation, in particular with K equal to, or greater than, three.

The distance metric may be determined (e.g., computed) using the second segmentation with the one or more corrections by the user taken into account directly and/or indirectly.

The step of "combining" may be interpreted in the sense of automatically generating a further medical image dataset (briefly also: image dataset), based on the distance metric, the determined second segmentation and the medical image of the first medical image dataset. The generated further image dataset may be based on the medical image of the first medical image dataset and may comprise the distance metric and/or the determined second segmentation.

The training database may stem from, or may make use of, a picture archiving and communication system (PACS). PACS may comprise a medical imaging technology which provides economical storage and convenient access to images from multiple imaging modalities (also denoted as: source machine types). Electronic images and reports may be transmitted digitally via PACS, eliminating the need to manually file, retrieve, and/or transport film jackets, e.g., the folders used to store and protect the medical image, e.g., X-ray film.

The universal format for PACS image storage and transfer may be Digital Imaging and Communications in Medicine (DICOM). Combined with available and emerging web technology, PACS may have the ability to deliver timely and efficient access to medical images, interpretations, and related data, in particular comprising annotated segmentations.

The training database of medical images may comprise medical images received from one or more medical imaging devices using at least one medical imaging modality. Alternatively or in addition, the training steps of the NN may be performed using medical images from at least two different medical imaging modalities. The medical images may be received from at least two different medical imaging devices using different medical imaging modalities (e.g., one medical imaging modality per medical imaging device).

By using medical images from at least two different medical imaging modalities, the NN may be trained for a wider variety of images in the inference phase (e.g., as compared to training using a single medical imaging modality).

The inference phase may also be denoted as application phase. Alternatively or in addition, the inference phase may be used for, e.g., new and/or contemporary, clinical diagnosis.

Medical imaging modalities may comprise magnetic resonance imaging (MRI), computed tomography (CT), positron emission tomography (PET), ultrasound (US), and/or radiology (also denoted as X-ray imaging).

The RVT architecture of the NN may comprise a hierarchical encoder and a hierarchical decoder. The hierarchical encoder may comprise at least one overlap patch embedding and at least one transformer block. Alternatively or in addition the hierarchical decoder may comprises at least one upsampling block (also denoted as upsample block). Further alternatively or in addition, the RVT architecture may further comprise recursively performing a segmentation based on the last output segmentation. Optionally, the recursively performed segmentation may be further based on one or more corrections by a user on the last output segmentation.

In particular, in the training phase, at least one correction by a user (e.g., in at least one step of the iteration and/or recursion) may be received. The at least one correction by the user in the training phase may comprise a synthetic correction. Alternatively or in addition, in the inference phase, one or more manual corrections by a user may be received.

The recursion may also be denoted as iteration. Alternatively or in addition, any step of recursively determining and/or outputting a segmentation may correspond to iteratively determining and/or outputting the segmentation.

The NN may comprise a convolutional neural network (CNN; also: ConvNet), and/or parts of a CNN layer architecture, e.g., a CNN stem end and/or CNN front end.

The NN, in particular the CNN, may comprise a U-net. The U-net may comprise a contracting path and an expansive path, giving it a U-shaped architecture. The contracting path of the U-net may comprise a, e.g., conventional and/or fully, CNN, that comprises a repeated application of convolutions, each followed by a rectified linear unit (ReLU) and a max pooling operation. During the contraction, the spatial information may be reduced while feature information may be increased. The expansive path of the U-net may combine the feature information and spatial information through a sequence of up-convolutions and concatenations with high-resolution features from the contracting path.

Max pooling may comprise a pooling operation that calculates the maximum value for patches of a feature map, and uses it to create a downsampled (and/or pooled) feature map. Max pooling may, e.g., be used after a convolutional layer. Max pooling may add a small amount of translation invariance, e.g., meaning translating the image by a small amount does not significantly affect the values of most pooled outputs.

Alternatively or in addition, the NN may comprise a ResNet (e.g., short for residual neural network) encoder. The ResNet may comprise a CNN architecture, made up of series of residual blocks (ResBlocks) with skip connections, e.g., with the skip connections differentiating ResNets from other CNNs. The skip connections (also denoted as shortcuts) may be used to jump over one or more, in particular, hidden, layers (e.g., HighwayNets may also learn the skip weights themselves through an additional weight matrix for their gates). E.g., the ResNet may be implemented with double-layer skips and/or triple-layer skips that comprise nonlinearities (e.g., accounted for, and/or compensated by, a ReLU) and/or batch normalization in between.

Alternatively or in addition, the CNN may comprise a region based CNN (R-CNN), in particular a Mask R-CNN, and/or one or more transformers.

Mask R-CNN may comprise a (e.g., single) NN tasked to perform object localization and segmentation simultaneously. The Mask R-CNN may perform a step of extracting of one or more regions (also denoted as boxes) from a (e.g., given) image using selective search. The Mask R-CNN may then perform a check if any of the regions (and/or boxes) contains an object and output a binary mask for each region (and/or box).

Further alternatively or in addition, the NN may comprise DeepMedic. DeepMedic may comprise an efficient multi-scale three-dimensional CNN for segmentation of medical images.

Still further alternatively or in addition, the NN may comprise a HighRes3DNet.

HighRes3Dnet may be considered as a three counterpart to ResNet. The HighRes3Dnet may comprise a three-dimensional (3D) CNN architecture, made up of series of residual blocks (ResBlocks) with skip connections.

Any one of the segmentations may be performed using an extension of the conventional segmentation tool ITK-SNAP. ITK-SNAP may comprise an interactive software application that allows users to navigate three-dimensional medical images, manually delineate anatomical regions of interest, and/or perform automatic image segmentation.

The one or more corrections by the user (also denoted as: input by the user; briefly: user input) may comprise adding and/or deleting (also denoted as subtracting), e.g., a line and/ or a contour, of a segmentation. Alternatively or in addition, the input by the user may comprise selecting, and/or using, an editing tool. The editing tool may be configured for adding and/or subtracting at least part of the first segmentation.

The one or more corrections by the user may be localized within the medical image. E.g., a correction may correspond to, or may be comprised in, a region of interest (ROI) of the medical image.

The one or more corrections by the user may comprise manual corrections (also denoted as: real corrections) performed by a medical practitioner, e.g., a radiologist. The manual corrections used in the training phase may, e.g., comprise a subset of the annotations comprised in the first medical image dataset.

Alternatively or in addition, the one or more corrections may comprise synthetic corrections and/or simulated corrections. Any one of the synthetic corrections and/or the simulated corrections may be generated by a computing unit.

The result of the one or more corrections to the first segmentation may be a second segmentation, which differs from the first segmentation, of the same medical image, e.g., at least locally at, and/or close to, the position of the one or more corrections by the user. E.g., the first segmentation and the segmentation may differ within a ROI of the medical image. The ROI may be specified by the user input.

The distance metric may also be denoted as, and/or may correspond to a, loss function.

The distance metric may comprise a Euclidean distance and/or a geodesic distance, or any combination thereof, e.g., a weighted sum.

The Euclidean distance may comprise a physical distance among pixels, e.g., among pixels with identical (in particular binary and/or K-ary) segmentation value and/or identical red green blue (RGB) and/or an RGB-alpha (RGBA) classification. Alternatively or in addition, the Euclidean distance may (e.g., completely) ignore the similarity between the pixels.

The geodesic distance may comprise a similarity measure between pixels in the neighborhood, e.g., in terms of a (in particular binary and/or K-ary) segmentation value, and/or in terms of a color, e.g., according to a red green blue (RGB) and/or an RGB-alpha (RGBA) classification.

The distance metric may be applied, e.g., independently and/or separately, per pixel of the medical image.

The Euclidean distance and/or the geometric distance may be determined, e.g., independently and/or separately, for each pixel of the medical image.

In the training phase of the NN, the annotated segmentation (also denoted as the ground truth segmentation) may be, or may act as, a reference segmentation for determining the distance metric of the last (also denoted as latest) segmentation. Alternatively or in addition, the last-but-one (also denoted as preceding) segmentation may be, or may act, as the reference metric for determining the distance metric of the last (also denoted as latest) segmentation.

In the inference phase (also denoted as application phase, and/or during deployment) of the NN, the distance metric may be determined relative to the one or more corrections by the user, and/or relative to a further (and/or modified) segmentation based on the one or more corrections by the user.

In the training phase, and/or in the inference phase, a reliability and/or a quality of the last segmentation may be quantified in terms of the distance metric. E.g., small values of the distance metric may correspond to a reliable and/or high-quality segmentation. Alternatively or in addition, large values of the distance metric may correspond to an unreliable and/or low-quality segmentation.

Alternatively or in addition, training the NN, in particular comprising training phases without corrections by the user, may comprise applying a predetermined loss function, e.g., a cross-entropy loss function.

Still further alternatively or in addition, the distance metric may comprise a Dice score. By the Dice score, a similarity between the second segmentation (and/or the third, fourth, and/or any further, segmentation) and the annotated segmentation (also denoted as ground truth segmentation) may be determined (and/or quantified).

Any one of the loss functions, the distance metric, and/or the Dice score may comprise a weighted sum, e.g., a sum over pixels and/or a sum over weighted contributions. Alternatively or in addition, any one of the loss functions, the distance metric, and/or the Dice score may comprise a (e.g., independent) value per pixel of the medical image.

By performing the third segmentation based on the second segmentation, which comprises the one or more corrections by the user, and based on the determined distance metric, the NN (e.g., the CNN) may be trained to perform modifications to initial (e.g., first) segmentations based on user input (also denoted as corrections by the user).

Performing the third segmentation may comprise preserving the second segmentation at positions of the medical image, where the distance metric is below the predetermined threshold value. Alternatively or in addition, performing the third segmentation may comprise performing a new segmentation at positions of the medical image, where the distance metric is above the predetermined threshold value.

By training the NN on a plurality of medical images, in particular comprising a plurality of medical images obtained using a variety of medical imaging modalities, the NN may be able to perform segmentations, in particular in an inference phase (also denoted as application phase) on organs, and/or objects, that the NN has not been trained on in the training phase.

The inference phase (also: application phase) may comprise a phase of inference, e.g., segmentations, of medical images without annotated segmentations (and/or without available ground truth), and/or medical images that are not comprised in the training database.

Alternatively or in addition, by the training of the NN with corrections by a user, and/or with medical images from a variety of medical imaging modalities, the NN may be enabled for adaptation after the training phase, and/or for adaptation in the inference phase. The adaptivity may comprise (e.g., previously) untrained image contexts (e.g., in terms of the organs comprised in the medical image, in particular organs that were not comprised in the medical images of the training database), (e.g., previously) untrained pathologies (e.g., rare abnormalities, for which no suitable training dataset exists), and/or medical images from medical imaging modalities that were not represented in the training database.

The training method can enable a high segmentation accuracy and robustness, both for two-dimensional (2D) imaging and for three-dimensional (3D) imaging, in particular with a small number of user interactions in the inference phase, e.g., by only re-running a segmentation on, or close to, a position of the medical image, where the user performed one or more corrections (and/or only in a ROI indicated by the user input). Thereby, a time of the inference phase (also denoted as application phase) may be shortened, and/or a time of a user, e.g., a radiologist evaluating the medical image in view of a potential diagnosis and/or therapy plan, may be shortened. Alternatively or in addition, by the training method, a localized updating of the final segmentation, e.g., as compared to an initial (e.g., first) segmentation can be enabled, e.g. rather than an updating of the segmentation of the entire medical image. The extent of updating may be determined by the amount of user interaction (and/or user input, and/or corrections performed by the user).

Alternatively or in addition, by the computer-implemented method, both NN and user interaction-based uncertainties can be reduced during an image-specific fine-tuning, which the NN is trained on in the training phase and applies in the inference phase.

By the inventive technique, a convergence to an accepted result (e.g., a segmentation) of a fully automatic DL-based method, and/or an interactive DL-based method by using a recursive formulation for NNs based on vision transformers is enabled. An overall time it takes to achieve a clinically acceptable result with and/or without user corrections (also denoted as user interaction) is minimized, in particular for image segmentation and, in general, on Image-to-Image (121) translation tasks.

The method may further comprise, in particular in the training phase of the NN, a step of receiving, at the UI, at least one correction by the user on the output third segmentation.

Alternatively or in addition, the method may further comprise, in particular in the training phase of the NN, a step of determining, based on the output third segmentation, the fourth segmentation taking into account the at least one received correction to the third segmentation.

The steps of performing a further segmentation, e.g., by the NN, and receiving a further correction by the user may alternate. E.g., the training using the medical image of the first medical image dataset may repetitively perform the method steps until the segmentation output by the NN is sufficiently close to the annotated segmentation. The sufficient closeness may be measured, and/or determined, in terms of the distance metric, any one of the loss functions, and/or the Dice score.

The NN may comprise a convolutional neural network (CNN). Optionally, the NN and/or the CNN may comprise a U-net and/or one or more ResNet encoders.

Any one of the segmentations (e.g., the annotated segmentation - also denoted as ground truth segmentation, or briefly: ground truth -, the first segmentation, the second segmentation, the third segmentation, the fourth segmentation, and/or any further segmentation) may comprises a binary segmentation. The binary segmentation may comprise classifying each pixel of the medical image as object, in particular as organ, as background, and/or foreground.

By the binary segmentation, the medical image may be subdivided into regions of the image comprising at least part of an organ (e.g., only a part at the boundary of the image) and into regions not comprising (e.g., not comprising any part of) an organ.

A region not comprising (e.g., not comprising any part of) an organ may be denoted as background. Alternatively or in addition, a region comprising (e.g., any part of) an organ may be denoted as foreground. Further alternatively or in addition, the binary segmentation may comprise, e.g., the value 0 for any background pixel and the value 1 for any pixel comprising at least part of an organ (and/or for any foreground pixel), or vice versa.

Alternatively or in addition, the segmentation may distinguish between different types of organs. A K-ary segmentation may comprise, e.g., the value 0 for any background pixel and the values 1, 2, 3,..,k-1 for different types of organs, e.g., lung, liver, and/or kidney (and/or for different types of the foreground). Alternatively or in addition, the k values of the K-ary segmentation may comprise any permutation of values 0,1,..., k-1 for the different types of organs (and/or the foreground) and the background.

Any one of the binary values 0, 1 and/or the K-ary values 0, 1, 2,.., K-1 assigned to a pixel of the medical image may be denoted as label of the pixel.

Any classification as organ as presented herein may be generalized to a classification of objects. The objects may, e.g., comprise, organs, pathologies, and/or implants (e.g., a pacemaker, stent, and/or artificial joint). Alternatively or in addition, any organ according to the notation used herein may comprise a pathology and/or implant. Further alternatively or in addition, any object may comprise a segmentation protocol.

A segmentation protocol may comprise any quantity of interest to an (e.g., end-) user, e.g., any quantity visible and/or demandable on a medical image. The segmentation protocol may, e.g., comprise one or more organs, one or more pathologies, and/or one or more implants. Alternatively or in addition, the segmentation protocol may comprise one or more anatomical structures. Further alternatively or in addition, the segmentation protocol may comprise hardware and/or one or more foreign (e.g., relative to a patient's biological body) objects, e.g., one or more implants (for example comprising a pacemaker, stent, and/or artificial joint).

By the training phase incorporating one or more corrections by the user, the NN may be trained for flexibility in the inference phase, and/or for time efficiency. E.g., a segmentation in the inference phase may be obtained at interactive speed, e.g., ranging from a few seconds to several minutes.

Any one of the segmentations (e.g., the annotated segmentation and/or ground truth segmentation, the first segmentation, the second segmentation, the third segmentation, the fourth segmentation, and/or any further segmentation) may comprise a K-ary segmentation with k equal to, or greater than, three. The K-ary segmentation may comprise classifying each pixel of the medical image as background, as foreground, and/or as organ. Classifying a pixel as organ (and/or as foreground) may further comprise classifying a type of organ (and/or a type of foreground).

The at least one correction by the user on any one of the segmentations (e.g., on the first segmentation, on the third segmentation, and/or on any further segmentation) may comprise a manual correction performed by the user.

The manual correction may comprise a, e.g., predetermined, part of the annotated segmentation (also denoted as ground truth segmentation). Alternatively or in addition, the first medical image dataset may comprise one or more manual corrections stored separately for the training phase.

Alternatively or in addition, the at least one correction by the user on any one of the segmentations (e.g., on the first segmentation, on the third segmentation, and/or on any further segmentation) may comprises a simulated correction.

The simulated correction may also be denoted as synthetic corrections. Alternatively or in addition, the simulated correction may comprise a correction generated by a computer algorithm, e.g., based on a differences between the annotated segmentation (also denoted as ground truth) and the first segmentation, e.g., close to the annotated segmentation, and/or interpolating between the first, third, and/or any further segmentation performed by the NN and the annotated segmentation.

The at least one correction by the user may comprise at least a piece of a contour, in particular of an object. Alternatively or in addition, the at least one correction by the user may comprise at least a piece of a border, in particular between objects. Alternatively or in addition, the at least one correction by the user may comprise a selection as interior of an object. Further alternatively or in addition, the at least one correction by the user may comprise a selection as exterior of an object. Still further alternatively or in addition, the at least one correction by the user may comprise a marking of a position.

The contour, and/or the border, may also be denoted as boundary.

The one or more corrections by the user may comprise drawing the contour, boundary, and/or border. Alternatively or in addition, the one or more corrections by the user may comprise marking a position (also denoted as location), and/or a ROI, on the medical image. The marking may comprise assigning a property to the position and/or to the ROI. The property may e.g., comprise if the position, and/or the ROI, belongs to the background, belongs to the foreground, forms part of an organ, and/or is assigned a color, e.g., according to the RGB and/or the RGBA scheme. Further alternatively or in addition, the one or more corrections by the user may comprise painting a position and/or painting a ROI.

Alternatively or in addition, the at least one correction by the user on any one of the segmentations (e.g., on the first segmentation, on the third segmentation, and/or on any further segmentation) may be performed on a localized ROI. Optionally, the second segmentation, the fourth segmentation, and/or any further segmentation based on the at least one correction by the user only differs from the first segmentation, the third segmentation, and/the preceding further segmentation output by the NN, respectively, only within, or near, the ROI.

By only re-running the segmentation (e.g., algorithm) along the ROI, the segmentation (e.g., algorithm) may be sped up, in particular in the inference phase. Alternatively or in addition, computing resources may be saved by only re-running the segmentation (e.g., algorithm) along parts of the medical image (e.g., only along one or more ROIs marked by the user input).

The medical image may comprise a two-dimensional (2D) image. Alternatively or in addition, the medical image may comprise a three-dimensional (3D) image, in particular a stack of slices. The medical image may comprise a two-dimensional image, e.g., an X-ray. Alternatively or in addition, the medical image may comprise a stack of slices, e.g., obtained by MRI and/or CT. Further alternatively or in addition, the medical image may comprise a temporal sequence of instantaneous medical images. Any one of the instantaneous medical images may comprise at least one two-dimensional image (e.g., a stack of slices) and/or a three-dimensional image.

The medical image may be acquired from a medical imaging device using a medical image modality comprising MRI, CT, US, PET, single-photon emission computed tomography (SPECT), angiography, and/or radiography.

Radiography may also be denoted as X-ray imaging.

The distance metric may comprise a Euclidean metric and/or a geodesic metric. Optionally, the distance metric may comprise a, in particular weighted, sum of the Euclidean metric and the geodesic metric.

The distance metric may also be denoted as distance map. Alternatively or in addition, the distance metric may be specific to, e.g., have an independent value for, each pixel of the medical image.

The weighted sum may interpolate between a purely Euclidean metric and a purely geodesic metric.

Training the NN may comprise applying any one of the preceding method steps to a plurality, or all, first medical image datasets comprised in the training database.

The method may further comprise an inference phase. The inference phase may comprise receiving, at the input layer of the NN, a further medical image from a medical imaging device. The inference phase may further comprise performing, by the one or more hidden layers of the NN with interconnections, a segmentation of anatomical structures comprised in the received further medical image. The interconnections may have been determined in the training phase of the NN. The inference phase may still further comprise outputting the segmentation of the anatomical structures of the further medical image.

The further medical image may also be denoted as up-to-date medical image and/or as diagnostic medical image. Alternatively or in addition, the further medical image may not have an associated ground truth segmentation.

The inference phase may further comprise receiving one or more corrections by a user and modifying the output segmentation (e.g., according to the one or more corrections by the user). E.g., the modification of the output segmentation may comprise performing a new segmentation, in particularly locally close to, and/or within a bounding box around, the corrections by the user. Alternatively or in addition, modifying the output segmentation may comprise iterations, e.g., based on determining a distance metric between the latest segmentation and the preceding segmentation. For example, the iterations may be continued based on the distance metric exceeding a predetermined threshold, and/or based on user input, e.g., initiating a further segmentation step.

By the method, modifying the output segmentation may be performed locally, e.g., only on a small fraction of the further medical image. Thereby, computing resources and/or memory may be saved.

As to a system aspect, a neural network system for training a NN for interactive medical image segmentation is provided. The system comprises the NN. The NN comprises an input layer configured to receive a medical image of a first medical image dataset from a training database of medical image datasets as input to the NN, wherein the first medical image dataset comprises the medical image and an annotated segmentation (which may also be denoted as ground truth segmentation). The NN further comprises one or more hidden layers with interconnections configured to perform a first segmentation of anatomic structures comprised in the medical image of the received first medical image dataset. The NN still further comprises an output layer configured to output the performed first segmentation for corrections by a user. The NN comprises a recursive vision transformer (RVT) architecture.

The system further comprises a UI configured to receive at least one correction by the user on the output first segmentation.

The system further comprises a determining unit configured to determine, based on the output first segmentation, a second segmentation taking into account the at least one received correction to the first segmentation.

The system further comprises an annotation reception interface configured to receive the annotated segmentation of the first medical image dataset. Alternatively or in addition, the input layer of the NN may comprise the annotation reception interface for receiving the annotated segmentation of the first medical image dataset.

The system further comprises a computing unit configured to determine a distance metric between the determined second segmentation and the annotated segmentation comprised in the received medical image dataset in association with the medical image. Alternatively or in addition, the computing unit is configured to determine a distance metric between the determined second segmentation and the output first segmentation.

The system still further comprises a combining unit configured to combine the determined distance metric, the determined second segmentation and the medical image (302) into a second medical image dataset.

The input layer of the NN is further configured to receive the combined second medical image dataset, and/or at least the medical image comprised in the second medical image dataset, as input to the NN.

The one or more hidden layers of the NN with interconnections are further configured to perform a third segmentation of the anatomic structures comprised in the medical image of the received second medical image dataset. Performing the third segmentation comprises changing one or more weights of the interconnections of the NN. The changing of the one or more weights of the interconnections of the NN is based on the determined distance metric comprised in the second medical image dataset.

The output layer of the NN is further configured to output the performed third segmentation.

The computing unit is further configured to determine a further distance metric between the output third segmentation, and/or a fourth segmentation based on the third segmentation, and the annotated segmentation comprised in the received second medical image dataset. Alternatively or in addition, the computing unit is further configured to determine a further distance metric between the output third segmentation and the determined second segmentation, and/or a further distance metric between the (e.g., determined, in particular responsive to one or more further corrections by the user) fourth segmentation and the output third segmentation.

The NN is further configured to selectively repeat at least the steps of receiving a combined further medical image data set, performing a further segmentation of the anatomic structures comprised in the medical image of the received further medical image data set, outputting the performed further segmentation, and/or determining a (e.g., still) further distance metric between the output further segmentation and the annotated segmentation. Alternatively or in addition, the (e.g., still) further distance metric is determined between the output further segmentation and the directly preceding segmentation.

The selectivity of the step of selectively repeating the steps may comprise determining to repeat at least some of the previous steps if the further distance metric, or any still further distance metric, exceeds a predetermined threshold. Alternatively or in addition, the selectivity of the step of selectively repeating at least some of the previous steps may comprise determining to not repeat the steps if the further distance metric, or any still further distance metric, falls below the predetermined threshold.

The neural network system may be configured to perform any one of the steps, or comprise any one of the features, of the method aspect.

As to a further aspect, a computer program product is provided comprising program elements which induce a neural network system to carry out the steps of the method aspect for training a NN for interactive medical image segmentation, when the program elements are loaded into a memory of the neural network system.

As to a still further aspect, a computer-readable medium is provided on which program elements are stored that can be read and executed by a neural network system, in order to perform steps of the method aspect for training a NN for interactive medical image segmentation, when the program elements are executed by the neural network system.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labelled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: is a flow chart of a computer-implemented method for training a neural network (NN) for interactive medical image segmentation according to a preferred embodiment of the present invention;
- Fig. 2: is an overview of the structure and architecture of a NN system according to a preferred embodiment of the present invention;
- Fig. 3: shows an exemplary embodiment of the NN comprised in the NN system of Fig. 2, the NN comprising a recursive vision transformer (RVT) architecture; and
- Figs. 4A to 4D: schematically illustrate visual comparisons between an annotated segmentation and a segmentation performed by the NN comprising an RVT architecture.

Any reference signs in the claims should not be construed as limiting the scope.

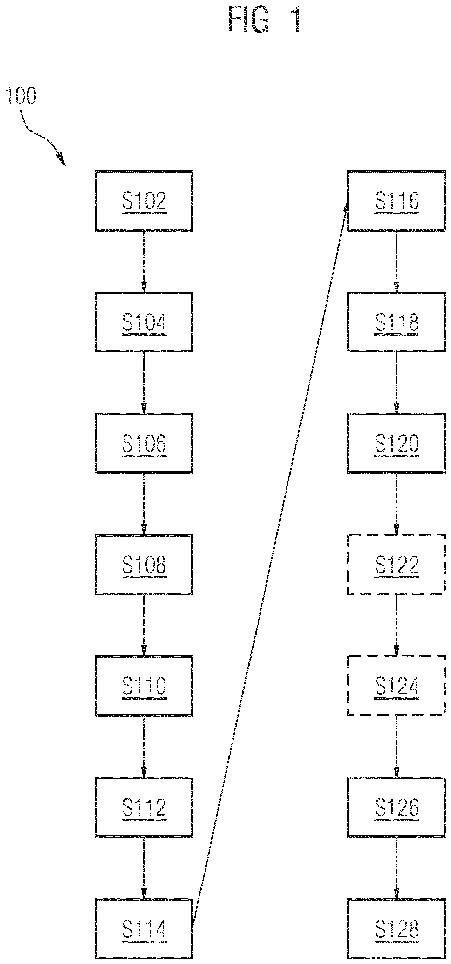

Fig. 1 shows an exemplary flow chart of a computer-implemented method for training a neural network (NN) for interactive medical image segmentation. The method is generally denoted by reference sign 100.

The method 100 comprises a training phase of the NN. The NN comprises a recursive vision transformer (RVT) architecture.

In a step S102 of the training phase of the NN, a first medical image dataset is received at an input layer of the NN from a training database of medical image datasets as input to the NN. The first medical image dataset comprises a medical image and an annotated segmentation (which may also be denoted as ground truth segmentation, or briefly as ground truth).

In a step S104 of the training phase of the NN, a first segmentation of anatomic structures comprised in the medical image of the received S102 first medical image dataset is performed y one or more hidden layers of the NN with interconnections.

In a step S106 of the training phase of the NN, the performed S104 first segmentation is output, at an output layer of the NN, for corrections by a user.

In a step S108 of the training phase of the NN, at least one correction by the user on the output S106 first segmentation is received at a user interface (UI).

In a step S110 of the training phase of the NN, based on the output S106 first segmentation, a second segmentation is determined taking into account the at least one received S108 correction to the first segmentation.

In a step S112 of the training phase of the NN, a distance metric between the determined S110 second segmentation and the annotated segmentation (also denoted as ground truth segmentation) comprised in the received S102 medical image dataset in association with the medical image is determined. Alternatively or in addition, the step S112 of determining the distance metric comprises determining a distance metric between the determined S110 second segmentation and the output first segmentation S106.

In a step S114 of the training phase of the NN, the determined S112 distance metric, the determined S110 second segmentation and the medical image are combined into a second medical image dataset.

In a step S116 of the training phase of the NN, the combined S114 second medical image dataset is received, at the input layer of the NN, as input to the NN.

In a step S118 of the training phase of the NN, a third segmentation of the anatomic structures comprised in the medical image of the received S116 second medical image dataset is performed by the one or more hidden layers of the NN with interconnections. Performing S118 the third segmentation comprises changing one or more weights of the interconnections of the NN. The changing of the one or more weights of the interconnections of the NN is based on the determined S112 distance metric comprised in the second medical image dataset.

In a step S120 of the training phase of the NN, the performed S118 third segmentation is output at the output layer of the NN.

In a step S126 of the training phase of the NN, a further distance metric between the output S120 third segmentation, and/or a fourth segmentation based on the third segmentation (e.g., after one or more further corrections by the user), and the annotated segmentation comprised in the received S116 second medical image dataset is determined. Alternatively or in addition, the step S126 of determining the further distance metric comprises determining a further distance metric between the output S120 third segmentation and the determined S110 second segmentation, and/or a further distance metric between the (e.g., determined, in particular responsive to one or more further corrections by the user) fourth segmentation and the output S120 third segmentation.

In a step S128 of the training phase of the NN, any of the preceding steps may be selectively repeated. The preceding steps that may be repeated may in particular comprise receiving S116 a combined further medical image data set, performing S118 a further segmentation of the anatomic structures comprised in the medical image of the received S116 further medical image data set, outputting S120 the performed further segmentation, and/or determining S126 a (e.g., still) further distance metric between the output S120 further segmentation and the annotated segmentation. Alternatively or in addition, the (e.g., still) further distance metric is determined between the output S120 further segmentation and the directly preceding segmentation.

The selectivity of the step S128 of selectively repeating comprises determining to repeat the steps (e.g., S116, S118, S120, and/or S126) if the further distance metric, or any still further distance metric, exceeds a predetermined threshold. Alternatively or in addition, the selectivity of the step S128 of selectively repeating comprises determining to not repeat the steps (e.g., S116, S118, S120, and/or S126) if the further distance metric, or any still further distance metric, falls below the predetermined threshold.

Optionally, in a step S122 of the training phase of the NN, UI at least one correction by the user on the output S120 third segmentation is received at the UI.

Further optionally, in a step S124 of the training phase of the NN, based on the output S120 third segmentation, the fourth segmentation is determined taking into account the at least one received S122 correction to the third segmentation.

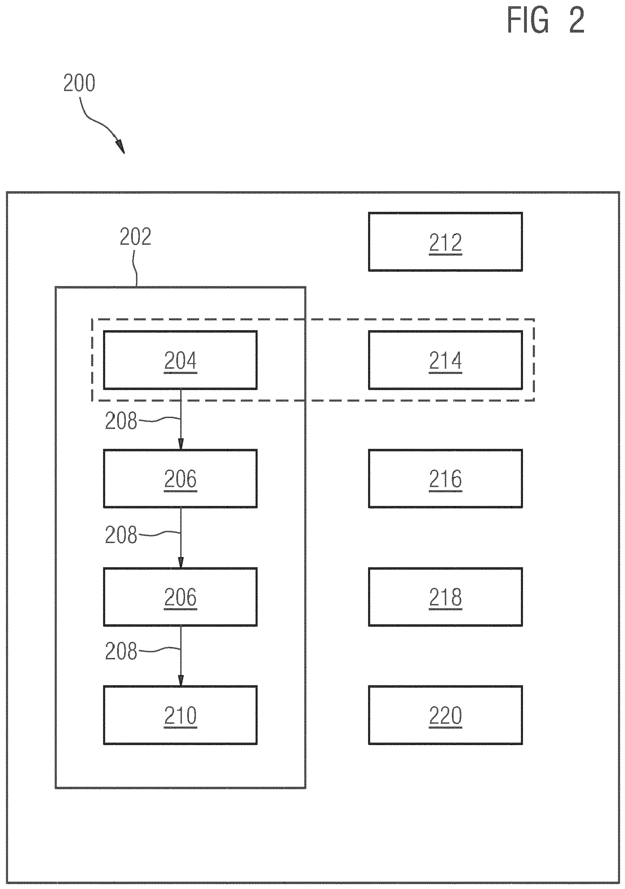

Fig. 2 shows a neural network system for training a neural network (NN) for interactive medical image segmentation. The NN system is generally referred to by reference sign 200, and the NN is generally referred to by reference sign 202. The NN comprises an RVT architecture.

The NN 202 comprises an input layer 204 configured to receive a first medical image dataset from a training database of medical image datasets as input to the NN 202. The first medical image dataset comprises a medical image and an annotated segmentation (which may also be denoted as ground truth segmentation).

The NN 202 further comprises one or more hidden layers 206 with interconnections 208 configured to perform a first segmentation of anatomic structures comprised in the medical image of the received first medical image dataset. In Fig. 2, merely as illustrative example, two hidden layers 206 with interconnection 208 among the hidden layers as well as interconnections 208 with the input layer 204 and the output layer 210 are shown.

The NN 202 still further comprises an output layer 210 configured to output the performed first segmentation for corrections by a user.

The NN system 200 further comprises a user interface (UI) 212 configured to receive at least one correction by the user on the output first segmentation.

The NN system 200 further comprises a determining unit 216 configured to determine, based on the output first segmentation, a second segmentation taking into account the at least one received correction to the first segmentation.

The NN system 200 further comprises an annotation reception interface 214 configured to receive the annotated segmentation of the first medical image dataset.

The NN system 200 further comprises a computing unit 218 configured to determine a distance metric (between the determined second segmentation and the annotated segmentation comprised in the received medical image dataset in association with the medical image. Alternatively or in addition, the distance metric is determined, by the computing unit 218, between the determined second segmentation and the output first segmentation.

The NN system 200 still further comprises a combining unit 220 configured to combine the determined distance metric, the determined second segmentation and the medical image into a second medical image dataset.

The input layer 204 of the NN 202 is further configured to receive the combined second medical image dataset as input to the NN 202. The one or more hidden layers 206 of the NN (202) with interconnections 208 are further configured to perform a third segmentation of the anatomic structures comprised in the medical image of the received second medical image dataset. Performing the third segmentation comprises changing one or more weights (not shown in Fig. 2) of the interconnections 208 of the NN 202. The changing of the one or more weights of the interconnections 208 of the NN 202 is based on the determined distance metric comprised in the second medical image dataset. The output layer 210 of the NN 202 is further configured to output the performed third segmentation.

The computing unit 218 is further configured to determine a further distance metric between the output third segmentation, and/or a fourth segmentation based on the third segmentation (e.g., based on one or more further corrections by the user), and the annotated segmentation comprised in the received second medical image dataset. Alternatively or in addition, the further distance metric comprises is determined, by the computing unit 218, between the output third segmentation and the determined second segmentation, and/or between the (e.g., determined, in particular responsive to one or more further corrections by the user) fourth segmentation and the output third segmentation.

The NN 202 is further configured to selectively repeat at least the steps of receiving a combined further medical image data set, performing a further segmentation of the anatomic structures comprised in the medical image of the received further medical image data set, outputting the performed further segmentation, and determining a (e.g., still) further distance metric between the output further segmentation and the annotated segmentation. Alternatively or in addition, the (e.g., still) further distance metric is determined between the output further segmentation and the directly preceding segmentation.

The selectivity of the step of selectively repeating the (e.g., previous) steps may comprise determining to repeat the (e.g., previous) steps if the further distance metric, or any still further distance metric, exceeds a predetermined threshold. Alternatively or in addition, the selectivity of the step of selectively repeating the (e.g., previous) steps may comprise determining to not repeat the (e.g., previous) steps if the further distance metric, or any still further distance metric, falls below the predetermined threshold.

In Fig. 2, the input layer 204 of the NN 202 and the annotation reception interface 214 are shown as separate entities. As indicated by the dashed line, the input layer 204 of the NN 202 and the annotation reception interface 214 may be merged in a joint entity, which may also be denoted as input layer.

In Fig. 2, the determining unit 216, the computing unit 218 and the combining unit 220 are further shown as separate entities. Any one of these entities may be combined with other entities shown in Fig. 2. For example, the computing unit 218 and the combining unit 220 may be realised by a processing unit, optionally further comprising memory.

Alternatively or in addition, the determining unit 216 may be comprised in the NN 202. E.g., the second segmentation may be determined by making use of the NN 202 for modifying the first segmentation according to the one or more corrections by the user.

Alternatively or in addition, the determining unit 216 may be realised by the processing unit, optionally further comprising memory. E.g., the corrections by the user may comprise a change in a contour with respect to the first segmentation. The second segmentation may correspond to deleting the previous contour and inserting the changed contour on the first segmentation.

The inventive technique, e.g., embodied by the method 100 and/or the NN system 200, mitigates, or solves, the problem of convergence to an accepted result of a fully automatic DL-based method or an interactive DL-based method, in particular in which user corrections can be applied to any intermediary segmentation, by proposing a recursive formulation for NNs based on vision transformers. An overall time it takes to achieve a clinically acceptable result with and/or without user interaction is minimized with focus on image segmentation and, in general, on Image-to-Image translation tasks. The image segmentation may comprise a binary segmentation and/or k-ary segmentation, any of which may also be denoted as classification (e.g., in terms of foreground, background, type of organ, and/or type of pathology).

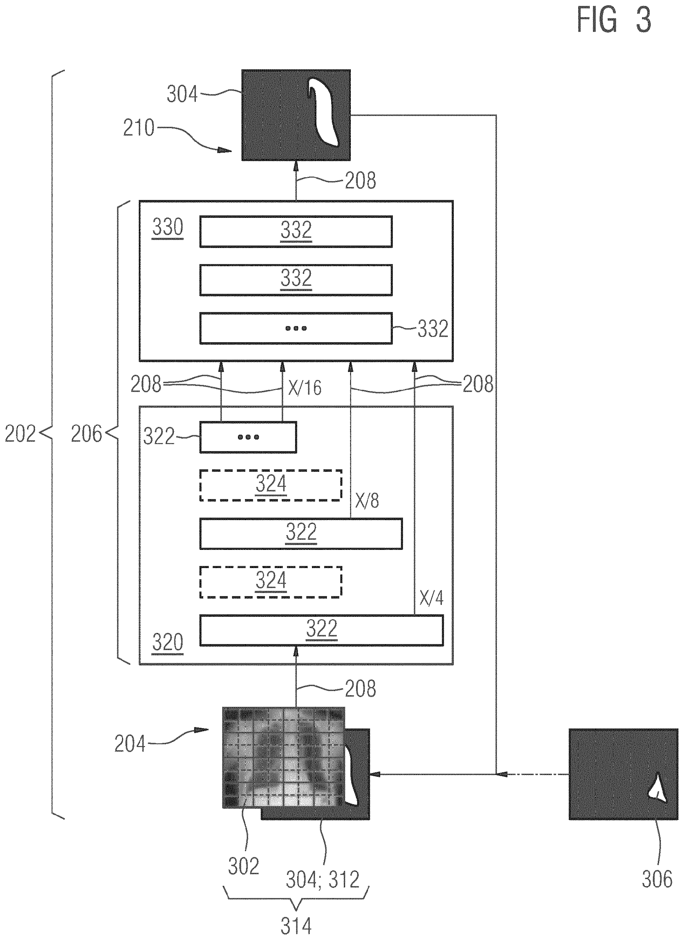

The RVT architecture according to the invention takes as input both the medical image (e.g., as comprised in the first medical image dataset) as well as a representation of the output segmentation (also denoted as output target), e.g., the second segmentation, and/or any further segmentation. An exemplary embodiment of an RVT architecture is schematically illustrated in Fig. 3.

At reference sign 302 in Fig. 3, a medical image is shown as input to the input layer 204 of the NN 202, which comprises the RVT architecture. The medical image 302 is subdivided into small overlapping patches (also denoted as blocks and/or tiles). E.g., two different sets of (in particular rectangular) patches each cover the medical image (e.g., with a single patch of one set per pixel).

The two different sets of (in particular rectangular) patches are relatively displaced. Each patch of one set is overlapped, e.g., partially, by at least one patch of the other set. E.g., the boundaries (e.g., in the interior of the medical image, and/or except for the boundaries coinciding with the boundaries of the medical image) within one set of patches pass through the interior (in particular centrally) of the other set of patches.

The hidden layers 206 of the RVT architecture of Fig. 3 comprise a hierarchical encoder 320 and a hierarchical decoder 330. Some of the interconnections 208 among the input layer 204, the hidden layers 206, and the output layer 210 are exemplarily shown.

The hierarchical encoder 320 comprises a plurality of overlap patch embeddings 322 and a plurality of transformer blocks 324. Any one of the transformer blocks 324 may be configured, and/or may comprise modules, for patch merging, multilayer-perceptron (MLP)-feature extraction , and/or self-attention.

MLP may comprise one or more linear transformation layers. Any given medical image size may be divided into patches of a predetermined size, e.g., 4×4. Size herein may refer to a number of pixels (e.g., per direction, e.g. length and width of the medical image). Alternatively or in addition, the hierarchical encoder may use the patches as input to obtain multi-level features with different resolution, e.g., {1/4, 1/8, 1/16} or {X/4, X/8, X/16}, of the medical image (e.g., with X the resolution of the medical image, in particular before subdividing into patches).

The hierarchical decoder 330 comprises a plurality of upsample blocks 332. Any one of the upsample blocks 332 may be configured, and/or comprises modules, for upsamling, MLP decoding and/or concatenating.

At the output layer 210 of the NN 202 in Fig. 3, a first segmentation 304 is output after inputting the medical image 302 once into the RVT architecture 202.

In the recursive mode of operation of the RVT architecture 202, the input dataset (also denoted as target representation) is directly (e.g., by combining the medical image 302 with the segmentation 304 output by the output layer 210 of the NN 202), in particular without modification of the output segmentation 304, obtained from the current segmentation output 304 of the RVT network 202 (also denoted as NN 202 with RVT architecture). The process, e.g., of obtaining a segmentation 304, may be iteratively run until the segmentation input 304; 312 (and/or the medical image dataset input 314) and/or the segmentation output 304 stabilizes and/or converges to a fixed image segmentation (also denoted as target).

During the training phase of the NN 202 comprising the RVT architecture, it may be verified if the stabilized and/or converged fixed image segmentation 304; 312 corresponds to, or closely resembles, the annotated segmentation of the training dataset, in which the medical image is comprised.

In Fig. 3, as an example, a second medical image dataset 314 is shown as input of a first iteration (e.g., after having obtained a first segmentation 304 of the medical image 302 by running I through the NN 202). The second medical image dataset 314 comprises the medical image 302 and the first segmentation 304 in the case that no correction 306 by a user was performed. Otherwise, or in case some user correction 306 is performed, the second medical image dataset 314 comprises the medical image 302 and a second segmentation 312, which is obtained from modifying the first segmentation 304 based on the one or more corrections 306 by the user.

For (e.g., starting) the first iteration, the segmentation (also denoted as target) of a first medical image dataset may be empty, in particular in the inference phase (also denoted as application phase) of the NN 202 (also denoted as RVT network 202).

Alternatively or in addition, for (e.g., starting) the first iteration, the segmentation (also denoted as target) of a first medical image dataset may comprise any prior segmentation (also denoted as target) available for the current medical image, in particular an annotated segmentation (also denoted as ground truth segmentation) for a first medical image dataset comprised in a training database for training the NN 202 in a training phase.

The training phase of the NN 202 may precede the inference phase (also denoted as application phase).

In the training phase, the RVT network 202 is iteratively trained to change the (e.g., current) medical image 302 and segmentation (also denoted as target) 304; 312 input pair 314 to the medical image 302 and the annotated segmentation (also denoted as ground truth segmentation or ground truth target).

A distance function (also denoted as cost function) may be weighted by a difference between the most recent (also denoted as current) segmentation (also denoted as target) 304; 312 of the medical image 302 and the annotated segmentation (also denoted as desired image target) of the medical image 302.

Alternatively or in addition, in the training phase, one or more, e.g., synthetic, corrections 306 by a user may be performed, e.g., at least in one iteration step.

The corrections 306 by a user may comprise manual corrections and/or synthetically generated corrections (which may also be denoted as simulated corrections). The synthetically generated corrections may, e.g., be based on (in particular a localized region) of the annotated segmentation (also denoted as ground truth segmentation). Alternatively or in addition, the corrections may be denoted as image-specific label refinement, e.g., based on geodesic maps.

Further alternatively or in addition, the distance function may comprise a distance between the last segmentation 312, e.g., comprising one or more corrections 306 by the user, and the preceding segmentation 304.

In a variant of the inventive RVT architecture 202, the input segmentation (also denoted as input target) 312 may comprise one or more corrections 306 (also denoted as interactive inputs) by a user that can be used by the RVT network 202 to infer an output segmentation (also denoted as target) biased towards a user preference. E.g., a user may consider a size of pathology differently from a, e.g., first, segmentation, and any further segmentation 312 may be biased towards the size input as correction 306 by the user.

According to an embodiment, the medical image 302 is obtained from radiography (also denoted as X-rays), and an anatomical region on the medical image 302 comprises a patient's chest. A segmentation 304; 312 may comprise determining an existence, and/or a region of a pneumothorax pathology. A pneumothorax pathology may comprise a collection of air outside the lungs but within the pleural cavity.

Initial experiments were, e.g., performed on a database of 1437 X-ray chest images for segmentation of pneumothorax pathology. The database was split in 1345 images for training and 92 for testing. The (in particular recursive) vision transformer architecture was similar to the SegFormer architecture proposed in [4], where the self-attention module was reshaped for reduced complexity and location information is implicitly encoded by Mix-FFN for the MLP-feat computation (see [4] for details, which is hereby included by reference).

Mix-FFN (e.g., with FFN short for feed-forward network) may comprise a feed-forward layer used in the SegFormer architecture. Alternatively or in addition, the SegFormer may comprise a semantic segmentation framework which unifies transformers with, in particular lightweight, MLP decoders. The transformer encoder (also denoted as hierarchical encoder) may be hierarchically structured for outputting multiscale features. A MLP decoder (comprised in, or corresponding to, the hierarchical decoder) may aggregate information from different layers, combining local attention and global attention.

The performance of the initial experiments was measured by the Dice coefficient between the final segmentation output after three (3) recursive iterations and the annotated (also denoted as, e.g., target, ground truth) pneumothorax segmentation. The average Dice coefficient was 0.81 with a median Dice of 0.86 on the 92 test datasets. As a reference, the performance without the recursive architecture (e.g., ViT) was 0.78 and 0.84 Dice, respectively for the average and the median.

The Dice coefficient may range between 0 and 1 with the value 1 indicating identity of the compared segmentations. E.g., a Dice coefficient close to 1 may indicate that the final segmentation output closely resembles the annotated (e.g., pneumothorax) segmentation.

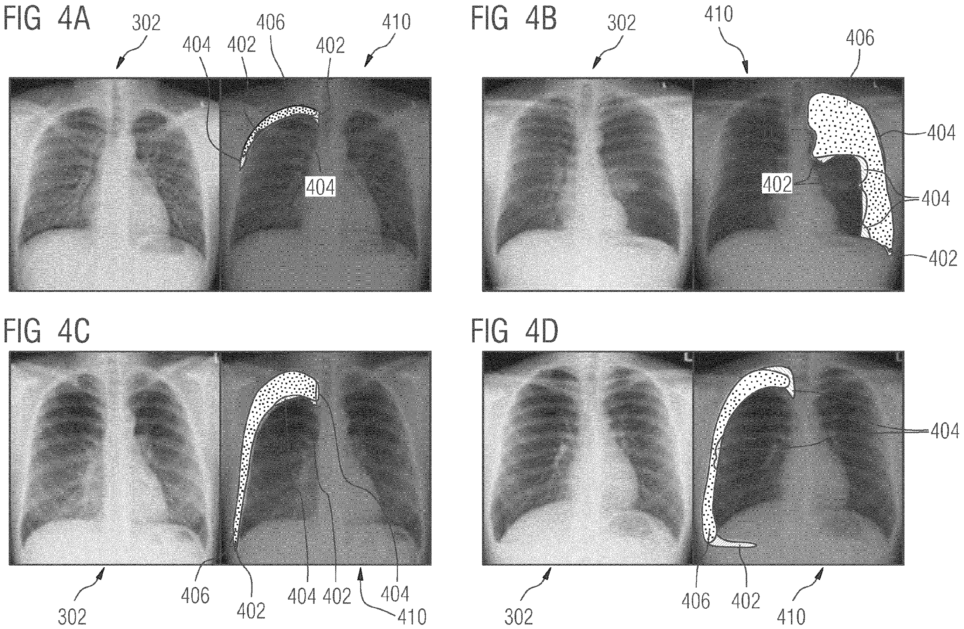

Figs. 4A, 4B, 4C and 4D show illustrative examples of pneumothorax segmentations in X-ray images 302. The left-hand side of each of the Figs. 4A, 4B, 4C and 4D shows the medical image 302 obtained from X-ray imaging. The right-hand side of each of the Figs. 4A, 4B, 4C and 4D shows an overlay 410 of the medical image 302 and two different segmentations, which are compared in each of the overlays 410.

A first segmentation in each overlay 410 comprises the annotated segmentation (also denoted as ground truth segmentation) associated with the medical image 302.

A second segmentation in each overlay 410 shows the output segmentation (also denoted as detection, or detected segmentation) from a RVT network 202.

At reference sign 406 in each overlay image 410, an anatomical region classified as pneumothorax pathology both by the annotated segmentation and the output segmentation is shown.

At reference sign 402 in each overlay image 410, one or more anatomical regions classified as pneumothorax pathology by the annotated segmentation, but not by the output segmentation, are shown.

At reference sign 404 in each overlay image 410, one or more anatomical regions classified as pneumothorax pathology by the output segmentation, but not by the annotated segmentation, are shown.

The interactive segmentation, e.g., based on one or more corrections 306 by a user can be augmented as further detailed in the companion patent application [5], where is included herein by reference.

The, in particular inventive, medical image segmentation technique presented here may increase an accuracy and/or a robustness of segmentation, or more generally of image-to-image mapping, due to anatomical variants, various pathologies, signal noise and/or use of different medical scanners, e.g., comprising multiple medical imaging modalities. Alternatively or in addition, the inventive technique can be used in an interactive manner, e.g., by receiving one or more corrections by a user, to converge to a user-accepted output, in particular a user-accepted segmentation.

The inventive technique comprises a recursive formulation of vision transformer (ViT) neural network, which allows to train a system to converge towards the desired output, in particular comprising an annotated segmentation, iteratively. Alternatively or in addition, the inventive technique can incorporate user corrections (also denoted as user inputs) into the iterative process, e.g., therefore allowing for interactive editing solutions based on deep learning architectures.

The inventive technique can increase automation and trust of deployed systems by reducing the number of errors in image-to-image mapping applications such as two-dimensional (2D), three-dimensional (3D), and/or four-dimensional (4D) medical image segmentation. Faster convergence to a clinically accepted segmentation, and/or generally target image and/or mask, may be achieved than conventionally. Thereby, computing resources and memory may be saved.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

### List of References

[1] S. Minaee, Y. Y. Boykov, F. Porikli, A. J. Plaza, N. Kehtarnavaz and D. Terzopoulos, "Image Segmentation Using Deep Learning: A Survey," in IEEE Transactions on Pattern Analysis and Machine Intelligence, doi: 10.1109/TPAMI.2021.3059968.
[2] Khan, S.H., Naseer, M., Hayat, M., Zamir, S.W., Khan, F.S., Shah, M.: "Transformers in vision: a survey." In ACM Computing Surveys, https://dl.acm.org/doi/abs/10.1145/3505244 (2021).
[3] Rajchl, M., Lee, M. C., Oktay, O., Kamnitsas, K., Passerat-Palmbach, J., Bai, W., ... & Rueckert, D. (2016). "Deepcut: Object segmentation from bounding box annotations using convolutional neural networks." IEEE transactions on medical imaging, 36(2), 674-683.
[4] Xie, E., Wang, W., Yu, Z., Anandkumar, A., Alvarez, J. M., & Luo, P. (2021). "SegFormer: Simple and efficient design for semantic segmentation with transformers." Advances in Neural Information Processing Systems, 34.
[5] Awais Mansoor, Bogdan Georgescu, Sasa Grbic. "Technique for Interactive Medical Image Segmentation". Patent application. 22011-SIE-P-EP; 2022P11577EP; 2022E05307US.

### List of Reference Signs

- 100: Computer-implemented method
- S102: Step of receiving a first medical image dataset
- S104: Step of performing a first segmentation
- S106: Step of outputting the first segmentation
- S108: Step of receiving a correction by a user
- S110: Step of determining a second segmentation
- S112: Step of determining a distance metric
- S114: Step of combining the distance metric, second segmentation and medical image into a second medical image dataset
- S116: Step of receiving the second medical image dataset
- S118: Step of performing a third segmentation
- S120: Step of outputting the third segmentation
- S122: Optional step of receiving a further correction by the user
- S124: Optional step of determining a fourth segmentation
- S126: Step of selectively repeating the steps S 116 to 124
- 200: Neural network system
- 202: Neural network
- 204: Input layer
- 206: Hidden layer
- 208: Interconnection
- 210: Output layer
- 212: User Interface
- 214: Annotation reception interface
- 216: Determining unit
- 218: Computing unit
- 220: Combining unit
- 302: Medical image
- 304: First segmentation
- 306: Correction by a user
- 308: Region of Interest (ROI)
- 312: Second segmentation
- 314: Second medical image dataset
- 302: Hierarchical encoder
- 322: Overlap patch embedding block
- 324: Transformer block
- 330: Hierarchical decoder
- 332: Upsample block
- 402: Pathology in annotated segmentation only
- 404: Pathology in segmentation by NN only
- 406: Pathology agreement among segmentation by NN and annotated segmentation
- 410: Overlay of medical image, annotated segmentation and segmentation by NN

## Claims

1. Computer-implemented method (100) for training a neural network, NN (202), for interactive medical image segmentation, a training phase of the NN (202) comprising the method steps of:
- Receiving (S102), at an input layer (204) of the NN (202), a first medical image dataset from a training database of medical image datasets as input to the NN (202), wherein the first medical image dataset comprises a medical image (302) and an annotated segmentation, wherein the NN (202) comprises a recursive vision transformer, RVT, architecture;
- Performing (S104), by one or more hidden layers (206) of the NN (202) with interconnections (208), a first segmentation (304) of anatomic structures comprised in the medical image (302) of the received (S102) first medical image dataset;
- Outputting (S106), at an output layer (210) of the NN (202), the performed (S104) first segmentation (304) for corrections (306) by a user;
- Receiving (S108), at a user interface, UI (212), at least one correction (306) by the user on the output (S106) first segmentation (304);
- Determining (S110), based on the output (S106) first segmentation (304), a second segmentation (312) taking into account the at least one received (S108) correction (306) to the first segmentation (304);
- Determining (S112) a distance metric between the determined (S110) second segmentation (312) and the annotated segmentation comprised in the received (S102) medical image dataset in association with the medical image (302) and/or between the determined (S110) second segmentation (312) and the output (S106) first segmentation (304);
- Combining (S114) the determined (S112) distance metric, the determined (S110) second segmentation (312) and the medical image (302) into a second medical image dataset (314) ;
- Receiving (S116), at the input layer (204) of the NN (202), the combined (S114) second medical image dataset (314) as input to the NN (202);
- Performing (S118), by the one or more hidden layers (206) of the NN (202) with interconnections (208), a third segmentation of the anatomic structures comprised in the medical image of the received (S116) second medical image dataset (314), wherein performing (S118) the third segmentation comprises changing one or more weights of the interconnections (208) of the NN (202), wherein the changing of the one or more weights of the interconnections (208) of the NN (202) is based on the determined (S112) distance metric comprised in the second medical image dataset (314);
- Outputting (S120), at the output layer (210) of the NN (202), the performed (S118) third segmentation;
- Determining (S126) a further distance metric between the output (S120) third segmentation, and/or a fourth segmentation based on the third segmentation, and the annotated segmentation comprised in the received (S116) second medical image dataset (314) and/or between the output (S120) third segmentation, and/or a fourth segmentation based on the third segmentation, and the determined (S110) second segmentation (312), and/or the output (S120) third segmentation; and
- Selectively repeating (S128) at least the steps of receiving (S116) a combined further medical image data set, performing (S118) a further segmentation of the anatomic structures comprised in the medical image (302) of the received (S116) further medical image data set, outputting (S120) the performed further segmentation, and determining (S126) a still further distance metric between the output (S120) further segmentation and the annotated segmentation and/or between the output (S120) further segmentation and the directly preceding segmentation;
wherein the selectivity of the step of selectively repeating (S128) comprises determining to repeat the steps (S116; S118; S120; S126) if the further distance metric, or any still further distance metric, exceeds a predetermined threshold; and/or
wherein the selectivity of the step of selectively repeating (S128) the steps comprises determining to not repeat the steps (S116; S118; S120; S126) if the further distance metric, or any still further distance metric, falls below the predetermined threshold.

2. Method (100) according to claim 1, further comprising the steps of:
- Receiving (S122), at the UI (212) at least one correction by the user on the output (S120) third segmentation; and
- Determining (S124), based on the output (S120) third segmentation, the fourth segmentation taking into account the at least one received (S122) correction to the third segmentation.

3. Method (100) according to any one of the preceding claims, wherein the RVT architecture of the NN (202) comprises a hierarchical encoder (320) and a hierarchical decoder (330),
wherein the hierarchical encoder (320) comprises at least one overlap patch embedding (322) and at least one transformer block (324), and/or
wherein the hierarchical decoder (330) comprises at least one upsampling block (332); and/or
wherein the RVT architecture (202) further comprises recursively performing a segmentation based on the last output (S106) segmentation, and optionally based on one or more corrections (306) by a user on the last output (S106) segmentation.

4. Method (100) according to any one of the preceding claims, wherein the annotated segmentation, the first segmentation (304), the second segmentation (312), the third segmentation, the fourth segmentation, and/or any further segmentation comprises a binary segmentation, wherein the binary segmentation comprises classifying each pixel of the medical image as object, in particular as organ, as background, and/or foreground.

5. Method (100) according to any one of the preceding claims, wherein the annotated segmentation, the first segmentation (304), the second segmentation (312), the third segmentation, the fourth segmentation, and/or any further segmentation comprises a K-ary segmentation with k equal to, or greater than, three, wherein the K-ary segmentation comprises classifying each pixel of the medical image as background, as foreground, and/or as organ,
wherein classifying a pixel as organ further comprises classifying a type of organ, and/or wherein classifying a pixel as foreground further comprises classifying a type of foreground.

6. Method (100) according to any one of the preceding claims, wherein the at least one correction by the user on the first segmentation (304), on the third segmentation, and/or on any further segmentation, comprises a manual correction performed by the user.

7. Method (100) according to any one of the preceding claims, wherein the at least one correction by the user on the first segmentation (304), on the third segmentation, and/or on any further segmentation, comprises a simulated correction.

8. Method (100) according to any one of the preceding claims, wherein the at least one correction by the user is selected from the group, consisting of:
- at least a piece of a contour, in particular of an object;
- at least a piece of a border, in particular between objects;
- a selection as interior of an object;
- a selection as exterior of an object; and
- a marking of a position.

9. Method (100) according to any one of the preceding claims, wherein the at least one correction by the user on the first segmentation (304), on the third segmentation, and/or on any further segmentation, is performed on a localized region of interest, ROI, optionally wherein the second segmentation (312), the fourth segmentation, and/or any further segmentation based on the at least one correction by the user only differs from the first segmentation (304), the third segmentation, and/the preceding further segmentation output by the NN (202), respectively, only within, or near, the ROI.

10. Method (100) according to any one of the preceding claims, wherein the medical image comprises a two-dimensional image, and/or wherein the medical image comprises a three-dimensional image, in particular a stack of slices.

11. Method (100) according to any one of the preceding claims, wherein the medical image is acquired from a medical imaging device using a medical image modality, which is selected from the group, consisting of:
- magnetic resonance imaging, MRI;
- computed tomography, CT;
- Ultrasound, US;
- positron emission tomography, PET;
- single-photon emission computed tomography, SPECT;
- angiography; and
- radiography.

12. Method (100) according to any one of the preceding claims, wherein the distance metric comprises a Euclidean metric and/or a geodesic metric, optionally wherein the distance metric comprises a, in particular weighted, sum of the Euclidean metric and the geodesic metric.

13. Method (100) according to any one of the preceding claims, wherein training the NN (202) comprises applying any one of the preceding method steps to a plurality, or all, first medical image datasets comprised in the training database.

14. Method (100) according to any one of the preceding claims, further comprising an inference phase, wherein the inference phase comprises:
- receiving, at the input layer (204) of the NN (202), a further medical image from a medical imaging device;
- performing, by the one or more hidden layers (206) of the NN (202) with interconnections (208), a segmentation of anatomical structures comprised in the received further medical image, wherein the interconnections (208) have been determined in the training phase; and
- outputting the segmentation of the anatomical structures of the further medical image.

15. Neural network system (200) for training a neural network, NN (202), for interactive medical image segmentation, the system comprising:
- the NN (202) with:
o an input layer (204) configured to receive a first medical image dataset from a training database of medical image datasets as input to the NN (202), wherein the first medical image dataset comprises a medical image (302) and an annotated segmentation;
o one or more hidden layers (206) with interconnections (208) configured to perform a first segmentation (304) of anatomic structures comprised in the medical image (302) of the received first medical image dataset;
o an output layer (210) configured to output the performed first segmentation (304) for corrections (306) by a user;
wherein the NN (202) comprises a recursive vision transformer, RVT, architecture;
- a user interface, UI (212), configured to receive at least one correction (306) by the user on the output first segmentation (304);
- a determining unit (216) configured to determine, based on the output first segmentation (304), a second segmentation (312) taking into account the at least one received correction (306) to the first segmentation (304) ;
- an annotation reception interface (214) configured to receive the annotated segmentation of the first medical image dataset;
- a computing unit (218) configured to determine a distance metric between the determined second segmentation (312); and the annotated segmentation comprised in the received medical image dataset in association with the medical image (302) and/or between the determined second segmentation (312) and the output first segmentation (304); and
- a combining unit (220) configured to combine the determined distance metric, the determined second segmentation (312) and the medical image (302) into a second medical image dataset (314);
wherein the input layer (204) of the NN (202) is further configured to receive the combined second medical image dataset (314) as input to the NN (202);
wherein the one or more hidden layers (206) of the NN (202) with interconnections (208) are further configured to perform a third segmentation of the anatomic structures comprised in the medical image of the received second medical image dataset (314), wherein performing the third segmentation comprises changing one or more weights of the interconnections (208) of the NN (202), wherein the changing of the one or more weights of the interconnections (208) of the NN (202) is based on the determined distance metric comprised in the second medical image dataset (314);
wherein the output layer (210) of the NN (202) is further configured to output the performed third segmentation;
wherein the computing unit is further configured to determine a further distance metric between the output third segmentation, and/or a fourth segmentation based on the third segmentation, and the annotated segmentation comprised in the received second medical image dataset (314) and/or between the output third segmentation, and/or a fourth segmentation based on the third segmentation, and the determined second segmentation, and/or the output third segmentation; and
wherein the NN (202) is further configured to selectively repeat at least the steps of receiving a combined further medical image data set, performing a further segmentation of the anatomic structures comprised in the medical image (302) of the received further medical image data set, outputting the performed further segmentation, and determining a still further distance metric between the output further segmentation and the annotated segmentation and/or between the output further segmentation and the directly preceding segmentation;
wherein the selectivity of the step of selectively repeating comprises determining to repeat the steps if the further distance metric, or any still further distance metric, exceeds a predetermined threshold; and
wherein the selectivity of the step of selectively repeating comprises determining to not repeat the steps if the further distance metric, or any still further distance metric, falls below the predetermined threshold.

16. Neural network system (200) according to the directly preceding claim, further configured to perform any one of the steps, or comprise any one of the features, of the method claims 1 to 14.

17. A computer program product comprising program elements which induce a neural network system (200) to carry out the steps of the method for training a neural network, NN (202), for interactive medical image segmentation according to any one of the preceding method claims, when the program elements are loaded into a memory of the neural network system (200).

18. A computer-readable medium on which program elements are stored that can be read and executed by a neural network system (200), in order to perform steps of the method for training a neural network, NN (202), for interactive medical image segmentation according to any one of the preceding method claims, when the program elements are executed by the neural network system (200).
